# EUROPEAN PATENT SPECIFICATION

(11) **EP 4 371 798 B1**
(45) Date of publication and mention of the grant of the patent: **28.01.2026**
(21) Application number: 22208361.0
(22) Date of filing: 18.11.2022
(51) Int. Cl.: B60K 35/10, B60K 35/29, B60K 35/81, G06F 3/0488, G06F 3/041, G06V 20/59, G06V 40/20

(54) **METHOD FOR CONTROLLING AT LEAST ONE USER INTERFACE OF A VEHICLE**
VERFAHREN ZUR STEUERUNG MINDESTENS EINER BENUTZERSCHNITTSTELLE EINES FAHRZEUGS
PROCÉDÉ DE COMMANDE D'AU MOINS UNE INTERFACE UTILISATEUR D'UN VÉHICULE

(43) Date of publication of application: 22.05.2024
(73) Proprietor: Volvo Car Corporation, 405 31 Göteborg (SE)
(72) Inventor: JAVAHERI, Reza, 40531 Göteborg (SE)
(74) Representative: Maiwald GmbH

(56) References cited:
- US-A1- 2018 217 717
- US-A1- 2022 300 072

## Description

### TECHNICAL FIELD

The present invention relates to a method for controlling at least one user interface of a vehicle, a system for controlling at least one user interface of a vehicle, a vehicle with a system for controlling at least one user interface, a computing device and a computer program element.

### BACKGROUND ART

Known vehicles comprise at least one user interface configured in order to display information of the vehicle and to acquire information of a user of the vehicle by means of a touch interaction between the user of the vehicle and the at least one user interface, for example, the at least one user interface comprises a touchscreen. Thus, control elements in the interior of the vehicle are reduced and functions of the vehicle are controlled by means of touch interactions with the at least one user interface. Thereby, an operation of the touchscreen is simple and accurate when the vehicle is stationary, however, different lateral, vertical and/or longitudinal forces may occur during the movement of the vehicle, which lead to movements in the user's body and thus to incorrect entries on the touchscreen, such that required functions of the vehicle are not activated in time and accidents may occur.

A device and method for a predictive human-machine interface are disclosed in US 2018/217717 A1, in which a vehicular transition event may be detected by monitoring a plurality of sensor data. When the vehicular transition event occurs, a prediction for the vehicle-user input response to the vehicular transition event is formed, and a predictive vehicle-user input response is produced. Based on the predictive vehicle-user input response, display data for emphasizing a subset of a plurality of presented user interface elements is generated to facilitate a vehicle-user input.

US 2022/300072 A1 discloses personalized calibration functions for user gaze detection in autonomous driving applications. In various examples, systems and methods are disclosed that provide gaze predictions that are specific to a particular user by generating and applying, in deployment, personalized calibration functions to outputs and/or layers of a machine learning model. The calibration functions corresponding to a specific user may operate on outputs (e.g., gaze predictions from a machine learning model) to provide updated values and gaze predictions. The calibration functions may also be applied one or more last layers of the machine learning model to operate on features identified by the model and provide values that are more accurate. The calibration functions may be generated using explicit calibration methods by instructing users to gaze at a number of identified ground truth locations within the interior of the vehicle. Once generated, the calibration functions may be modified or refined through implicit gaze calibration points and/or regions based on gaze saliency maps.

In view of this, it is found that a further need exists to provide a method for controlling at least one user interface of a vehicle.

### SUMMARY

In the view of the above, it is an object of the present invention to provide a method controlling at least one user interface of a vehicle.

The problem is at least partially solved or alleviated by the subject matter of the independent claims of the present invention, whereby further examples are incorporated in the dependent claims.

According to a first aspect, a computer-implemented method for controlling at least one user interface of a vehicle, comprising:
providing user interface data of the at least one user interface;
providing user input data of an input of at least one user of the at least one user interface;
providing a user input model configured to analyze the user input data based on the user interface data and sensor data of the vehicle; and
processing the user interface data, the user input data by means of the user input model and generating user interface control data.

The at least one user interface may be configured as an output and/or input device for outputting information to the at least one user and/or for receiving information from the at least one user. Furthermore, the at least one user interface may comprise a display and/or a sensor for outputting and/or receiving information, in particular, the at least one user interface may comprise a touch screen.

The user interface data may comprise, for example, information for displaying and/or configuring graphics and input area for the at least one user interface, in particular a graphical user interface (GUI) for the at least one user interface. For example, the user interface data may at least configure the GUI properties, structure, and/or function for the at least one user interface.

The user input data may comprise, for example, information about an input of the at least one user to the at least one user interface, such as areas of the input and/or coordinates of the input. For example, the information may be xy-coordinates of the input on the at least one user interface, whereby the at least one user interface may comprise xy-coordinates to determine the position of the input and associate the xy-coordinates with the input, such as the xy-coordinates are used on a touch screen. Further, the input may in particular be a touch of the at least one user on the at least one user interface and the information may comprise an intensity of the touch.

By processing the provided data and model, the method may be configured to interpret an input from the at least one user to determine whether the input from the at least one user was intended or unintended. If the input of the at least one user was unintended, the at least one user interface may be controlled to correct the unintended input of the at least one user and replace the unintended input with an intended input of the at least one user interface.

In other words, the method may be configured to interpret interaction of the at least one user with the help of data of sensors of the vehicle and the method to filter out unintended or wrong touches by accident. Therefore, the method may use the GUI components of the at least one user interface together with the data of the sensors in order to improve the interacting experience of the at least one user of the at least one user interface, in particular while the vehicle driving. In addition, the method may be used in various vehicles that have user interfaces and sensors, as there is no need for explicit control units for the disclosed method.

Therefore, the disclosed method may be configured to improve the touch accuracy of the at least one user, in particular while the vehicle is in motion and different lateral forces, vibrations, and wobble occur. In addition, the method may further assist the driver to focus on driving.

According to the invention, the user input model is further configured to analyze side offset values to compensate for an offset of a touch to an upper, lower, left and/or right side of a button of the at least one user of the at least one user interface.

According to the invention, the sensor data comprises hand and/or arm movement values of the at least one user based on an optical sensor of the vehicle.

The optical sensor may be further configured to detect small hand movements of the at least one user.

In an implementation, the user input model may comprise a machine learning algorithm configured to analyze the user input data based on the user interface data and the sensor data of the vehicle.

The machine learning algorithm may improve the interaction between the at least one user and the at least one user interface, whereby in particular the accuracy of touch inputs by the at least one user to the at least one user interface may be improved by correcting unintended touch inputs.

In an implementation, the machine learning algorithm may be trained by an initial personal calibration data, a generalizing augmented touch data, an initial machine learning model data and/or an augmentation over time data.

The initial personal calibration data may be obtained, for example, by means of a setup in which the at least one user is asked to press at specific locations of the at least one interface unit.

In other words, the initial personal calibration data may compensate for an individual offset of at least each user of the at least one user interface, whereby the touch inputs of at least each user from the at least one user interface and user viewing angle of at least each user are taken into account. Furthermore, the initial personal calibration may be set and/or adjusted in at least the vehicle's settings.

The generalized augmented touch data may be received, for example, from a separate database that comprises generalized augmented touch data from different users. The different generalized augmented touch data may for example be initial personal calibration data and/or collected data during real drive cycles while different users are interacting with the at least one user interface.

The initial machine learning model data may for example be received from a separate database containing data pre-trained by different users and/or test persons. In addition, the initial machine learning model data can be tested before it is provided by the separate database, whereby A/B testing may be used, for example. Further, it may be possible to have different machine learning model data available to the at least one user.

Further, the initial machine learning model data may include sensor data, touch input data, user angle of view, and data on GUI components used. Thereby, the initial machine learning model data may be collected for example while driving and while a test person is asked to perform various tasks of using the GUI.

Furthermore, the initial machine learning model data may represent non-personalized model data that may be customized and/or enhanced by the at least one user during use and/or taking into account, for example, the viewpoint of the at least one user, whereby the customized and/or enhanced non-personalized model may be re-customized and/or enhanced for each user of the vehicle.

In addition, the non-personalized model data may comprise data about a user's viewing angle and/or other sensor data specific to the user. Therefore, the non-personalized model data may become individual for each user during the usage time of the at least one user interface.

The augmentation over time data may be obtained, for example, through an analysis of the user's continuous interaction with the at least one user interface. Thereby, training patterns may be characterized based on subsequent behavior of the at least one user and labelled based on the behavior, for example, if the at least one user presses outside next to an input component of the GUI and then presses on the respective input component and/or if the at least one user presses an input component of the GUI to start a function of the vehicle, subsequently stops the function, and subsequently presses another input component of the GUI adjacent to the input component.

In addition, data from at least one sensor of the vehicle and/or label data for each training pattern may also be associated with the augmentation data over time. For example, the label data may comprise whether the at least one user touched a correct or incorrect input component of the GUI. In this regard, touching the correct input component of the GUI may be detected based on the user's continued interaction with the GUI. Thereby, a touch of the incorrect input component of the GUI may be detected based on an abort of the function triggered thereby.

Furthermore, the generalizing augmented touch data may be manually and/or automatically labeled, whereby automated labeling may be inferred from a behavior of the at least one user, for example if the at least one user touched correct or incorrect.

In an implementation, the machine learning algorithm may be at least configured to compensate a deviation of the user input data with respect to the user interface data.

The deviation of the user input data may for example be understood as a wrong input and/or unintended input of the at least one user. Likewise, this incorrect input and/or unintended input of the at least one user may unintentionally activate a function of the vehicle which, in an unfavorable case, impedes the use of the vehicle of a driver.

The machine learning algorithm may, for example, use the initial personal calibration data, the generalizing augmented touch data, the initial machine learning model data, and/or the augmentation over time data to determine whether the input of the at least one user represent an intended input or an unintended input. Further, in the case of an unintended input, the machine learning algorithm may correct that unintended input to match to an intended input of the at least one user.

For example, the machine learning algorithm may compensate for the user input data by determining whether the input of the at least one user is intended or unintended, wherein the compensating may be, for example, correcting the user input data to preferably to perform a desired function of the vehicle.

In other words, the machine learning algorithm may be configured to compensate a faulty usage of an input component of the GUI of the at least one user, in particular in case different input component are provided by GUI, e.g. in case the different input components are arranged closely to each other.

In an implementation, the sensor data may comprise movement, speed and/or acceleration values provided by a movement, speed and/or an accelerometer sensor of the vehicle.

The sensor data may comprise movement data of the movement of the vehicle, which may be used to compensate for hand movements of the at least one user due to the movement data while using the at least one user interface.

In an implementation, the sensor data may comprise view angle values may be provided based on an optical sensor of the vehicle.

The sensor data may further comprise seating data of the seating of the at least one user, which may be used to compensate for an angle of view of the at least one user, whereby an offset angle may be calculated.

The optical sensor may comprise a camera unit that is used in particular to determine the interior of the vehicle.

The machine learning algorithm may, for example, use the initial personal calibration data, the generalizing augmented touch data, the initial machine learning model data, and/or the augmentation over time data to determine whether xy-coordinates of the input of the at least one user represent an intended input or an unintended input. Further, in the case of an unintended input, the machine learning algorithm may correct the xy-coordinates of the input in order to adjust respective values of the xy-coordinates of the input to match an intended input. In this respect, the deviation of the user input may for example be achieved by correcting the respective x and y values of the input.

For example, the machine learning algorithm may compensate the xy-coordinates of the input of the at least one user by determining whether the input of the at least one user is intended or unintended, wherein the compensating may be, for example, correcting the xy-coordinates to preferably perform a desired function of the vehicle.

In an implementation, the sensor data may comprise grip values with respect to grip intensities of the at least one user of the at least one user interface onto the at least one user interface.

In other words, the sensor data may comprise the intensity of a touch of the at least one user on the at least one user interface, for example, the lightness or hardness of the touch of the at least one user. Further, the sensor data may comprise the extent of the pressure area due to the touch on the at least one user interface.

In an implementation, the user input model may be configured to further analyze the user input data based on a user profile.

In other words, the machine learning algorithm may use sensory data to improve the accuracy, whereby the machine learning algorithm may compensate for a seated viewing angle of the at least one user by calculating an offset value for the at least one user interface, for a blocking view angle of the at least one user if the view of the at least one user of the at least one user interface is blocked, for example, by the user's finger, and a touch input is given to a side of a button of the GUI by calculating an offset value for the at least one user interface and/or any touch input given by the at least one user.

In addition, the machine learning algorithm may compensate for vibrations of the vehicle, hand movements of the at least one user in the air, and/or any small movements of the vehicle and/or the at least one user.

In other words, The GUI may further comprise input and/or output components, whereby these input and/or output components are configured as graphical areas within the GUI, for example. Furthermore, the input components may for example be configured to detect touch inputs of the at least one user in order to control a function of the vehicle. Moreover, the output components may for example be used to display functions of the vehicle.

Moreover, the machine learning algorithm may compensate for incorrect touch inputs due to vibration, for example, of the vehicle if different input and/or output components of the GUI are too close to each other and/or incorrect touch inputs from smaller input components of the GUI. Furthermore, the machine learning algorithm may extend the touch range around an input component of the GUI, for example, if an input touch to an specific input component is expected and/or the at least one user approaches to a specific input component.

Furthermore, the method may adapt the machine learning algorithm to better detect user intent in collected data samples of the initial personal calibration data, the generalizing augmented touch, the initial machine learning model data and/or the augmentation over time data, whereby the method may in particular be robust to noisy labels. Data samples may be collected for both training and testing purposes, for example, using the latter data samples as tests. Further, if a new version of the machine learning algorithm performs better on the test cases, a new machine learning algorithm may be used instead of an old machine learning algorithm.

A further aspect of the present invention relates to a system for controlling at least one user interface of a vehicle, comprising:
a first providing unit configured to provide user interface data of the at least one user interface;
a second providing unit configured to provide user input data of the at least one user interface;
a third providing unit configured to provide a user input model configured to analyze the user input data based on the user interface data and sensor data of the vehicle; and
a processing unit configured to process the user interface data, the user input data by means of the user input model and generating user interface control data.

According to the invention, the user input model is further configured to analyze side offset values to compensate for an offset of a touch to an upper, lower, left and/or right side of a button of the at least one user of the at least one user interface.

According to the invention, the sensor data comprises hand and/or arm movement values of the at least one user based on an optical sensor of the vehicle.

In an implementation, the system may further comprise a machine learning algorithm unit configured to analyze the user input data based on the user interface data and the sensor data of the vehicle.

A further aspect of the present invention relates to a vehicle comprising the disclosed system for controlling at least one user interface of the vehicle.

A further aspect of the present invention relates to a computer program element with instructions, which, when executed on a computing device of a computing environment, is configured to carry out the steps of the disclosed method in the disclosed system.

### BRIEF DESCRIPTION OF DRAWINGS

In the following, the invention is described exemplarily with reference to the enclosed figures, in which:
- **Fig. 1**: is an example of a diagram of the disclosed method;
- **Fig. 2**: is a schematic illustration showing an overview of an implementation of the disclosed system;
- **Fig. 3**: is a schematic illustration of an example of the disclosed system in a vehicle; and
- **Fig. 4**: is a schematic illustration of an example of the used machine learning algorithm.

Notably, the figures are merely schematic representations and serve only to illustrate examples of the present invention. Identical elements are in principle provided with the same reference signs.

### DETAILED DESCRIPTION

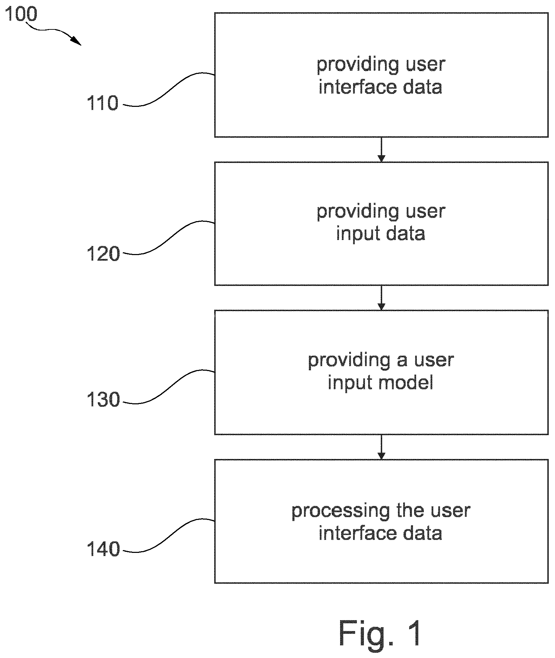

**Fig. 1** shows an example of a diagram of the disclosed method for controlling at least one user interface 100 of a vehicle, comprising: providing user interface data 110 of the at least one user interface; providing user input data 120 of an input of at least one user of the at least one user interface; providing a user input model 130 configured to analyze the user input data based on the user interface data and sensor data of the vehicle; and processing the user interface data 140, the user input data by means of the user input model and generating user interface control data.

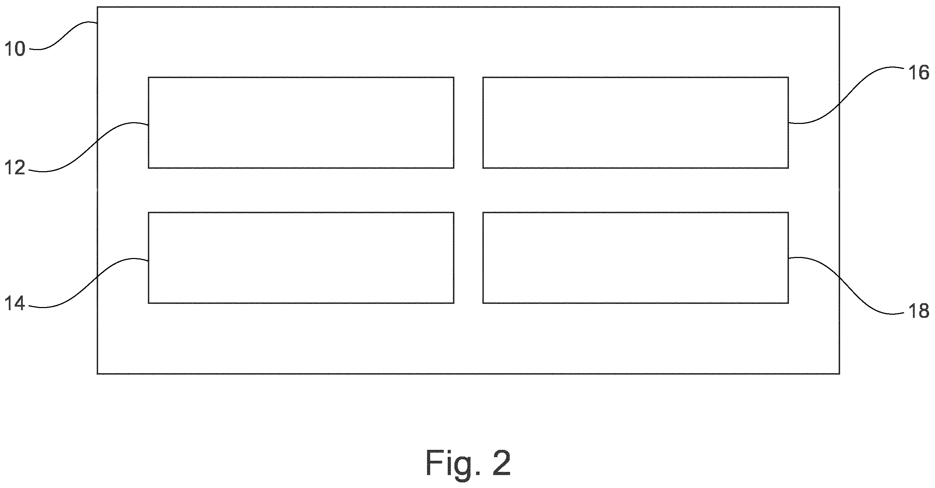

**Fig. 2** shows a schematic illustration showing an overview of an implementation of the disclosed system 10 for controlling at least one user interface of a vehicle, comprising: a first providing unit 12 configured to provide user interface data of the at least one user interface; a second providing unit 14 configured to provide user input data of the at least one user interface; a third providing unit 16 configured to provide a user input model configured to analyze the user input data based on the user interface data and sensor data of the vehicle; and a processing unit 18 configured to process the user interface data, the user input data by means of the user input model and generating user interface control data.

Further, the system 10 comprising a machine learning algorithm unit 20 configured to analyze the user input data based on the user interface data and the sensor data of the vehicle.

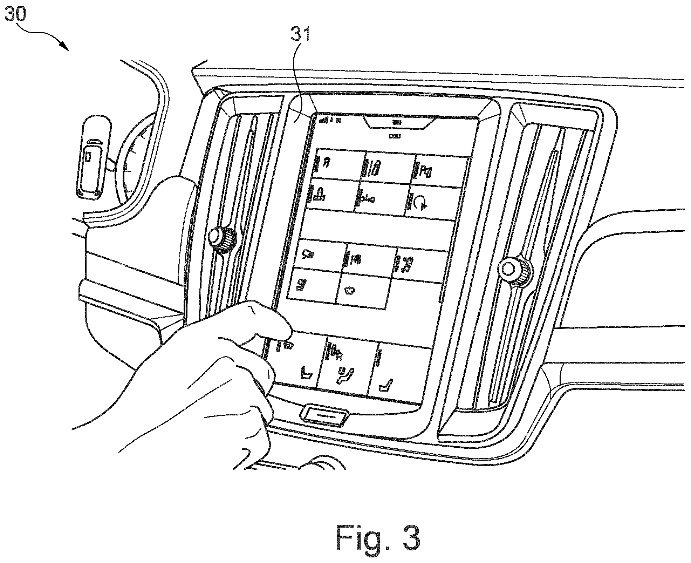

**Fig. 3** shows a schematic diagram of an example of the disclosed system in a vehicle 30, whereby an interior of the vehicle 30 is shown in which at least one user interface 31 is arranged. Furthermore, at least one hand of at least one user is shown using the at least one user interface, whereby in the user interface a GUI is presented that comprises various input and/or output components.

Further units of the system for controlling the at least one user interface 31 of the vehicle 30 are not apparent to the at least one user and are not shown in **Fig. 3****,** whereby these are required to implement the disclosed method.

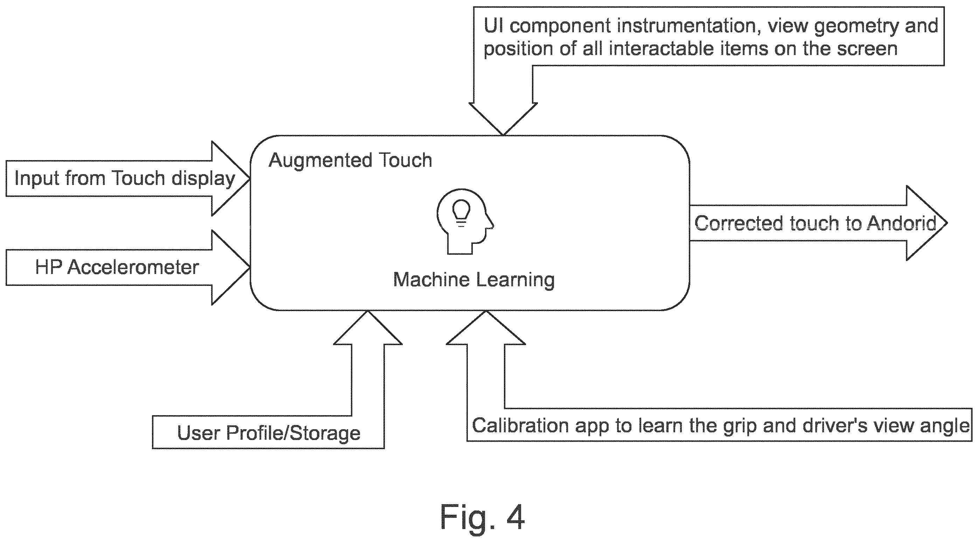

**Fig. 4** shows a schematic illustration of an example of the used machine learning algorithm 200, whereby the machine learning algorithm 200 is provided with data input from the touch display 210 of the at least one user interface, input from sensors 220 of the vehicle, in particular the acceleration sensors, input from user profiles 230, input from calibrations 240, for example touch intensity and/or view angle calibration, and input from GUI 250 of the at least one user interface, for example how the GUI is structured and which functions it provides.

Thereby, the machine learning algorithm analyze the provided input information/data to calculate control data for the at least one user interface in order to be able to correct the detected touch inputs of the at least one user. The calculated control data are transmitted to at least the at least one user interface.

Other variations to the disclosed examples may be understood and effected by those skilled in the art in practicing the claimed subject matter, from the study of the figures, the disclosure, and the appended claims. In particular, respective parts/functions of the respective example described above may also be combined with each other. In particular, the present invention is not limited to specific modules, vehicle functions, user interfaces, user interface areas/fields and/or communication methods. In the claims, the word "comprising" does not exclude other elements or steps and the indefinite article "a" or "an" does not exclude a plurality. The mere fact that certain measures are recited in mutually different dependent claims does not indicate that a combination of these measures may not be used to advantage. Any reference signs in the claims should not be construed as limiting the scope of the claims.

### LIST OF REFERENCE SIGNS

- 10: System for providing route data
- 12: First providing unit
- 14: Second providing unit
- 16: Third providing unit
- 18: Processing unit
- 20: Machine learning unit
- 30: Vehicle
- 31: User interface
- 100: Method for providing route data
- 110: Providing user interface data
- 120: Providing user input data
- 130: Providing a user input model
- 140: Processing the user interface data
- 200: Augmented Touch Algorithm
- 210: Input from touch display
- 220: Input from sensor
- 230: Input from user profile
- 240: Input from calibration
- 250: Input from GUI
- 260: Output calculated control data

## Claims

1. A computer-implemented method for controlling at least one user interface of a vehicle, comprising:
providing user interface data (110) of the at least one user interface;
providing user input data (120) of an input of at least one user of the at least one user interface;
providing a user input model (130) configured to analyze the user input data based on the user interface data and sensor data of the vehicle, whereby the user input model is further configured to analyze side offset values to compensate for an offset of a touch to a upper, lower, left and/or right side of a button of the at least one user of the at least one user interface, and whereby the sensor data is comprising hand and/or arm movement values of the at least one user based on an optical sensor of the vehicle; and
processing the user interface data (140), the user input data by means of the user input model and generating user interface control data.

2. The method according claim 1, whereby the user input model is comprising a machine learning algorithm configured to analyze the user input data based on the user interface data and the sensor data of the vehicle.

3. The method according claim 2, whereby the machine learning algorithm is trained by an initial personal calibration data, a generalizing augmented touch, an initial machine learning model data and/or an augmentation over time data.

4. The method according to any one of the claims 2 or 3, whereby the machine learning algorithm is at least configured to compensate a deviation of the user input data with respect to the user interface data.

5. The method according to any one of the preceding claims, whereby the sensor data is comprising movement, speed and/or acceleration values provided by a movement, speed and/or an accelerometer sensor of the vehicle.

6. The method according to any one of the preceding claims, whereby the sensor data is comprising view angle values provided based on an optical sensor of the vehicle.

7. The method according to any one of the preceding claims, whereby the sensor data is comprising grip values with respect to grip intensities of the at least one user of the at least one user interface onto the at least one user interface.

8. The method according to any one of the preceding claims, whereby the user input model is configured to further analyze the user input data based on a user profile.

9. A system for controlling at least one user interface of a vehicle, comprising:
a first providing unit (12) configured to provide user interface data of the at least one user interface;
a second providing unit (14) configured to provide user input data of the at least one user interface;
a third providing unit (16) configured to provide a user input model configured to analyze the user input data based on the user interface data and sensor data of the vehicle, whereby the user input model is further configured to analyze side offset values to compensate for an offset of a touch to a upper, lower, left and/or right side of a button of the at least one user of the at least one user interface, and whereby the sensor data is comprising hand and/or arm movement values of the at least one user based on an optical sensor of the vehicle; and
a processing unit (18) configured to process the user interface data, the user input data by means of the user input model and generating user interface control data.

10. The system according to claim 9, whereby the user input model is comprising a machine learning algorithm unit (20) configured to analyze the user input data based on the user interface data and the sensor data of the vehicle.

11. A vehicle comprising a system for controlling at least one user interface of the vehicle according to claim 9 or claim 10.

12. A computer program product with instructions, which, when executed on a computing device, is configured to carry out the steps of the method according to any one of the claims 1 to 8 in a system according to claim 9 or claim 10.

## Patentansprüche

1. Ein computerimplementiertes Verfahren zur Steuerung mindestens einer Benutzerschnittstelle eines Fahrzeugs, umfassend:
Bereitstellen von Benutzerschnittstellendaten (110) der mindestens einen Benutzerschnittstelle;
Bereitstellen von Benutzereingabedaten (120) einer Eingabe von mindestens einem Benutzer der mindestens einen Benutzerschnittstelle;
Bereitstellen eines Benutzereingabemodells (130), das dazu ausgestaltet ist, die Benutzereingabedaten auf der Grundlage der Benutzerschnittstellendaten und Sensordaten des Fahrzeugs zu analysieren, wobei das Benutzereingabemodell ferner dazu ausgestaltet ist, Seitenversatzwerte zu analysieren, um einen Versatz einer Berührung des mindestens einen Benutzers der mindestens einen Benutzerschnittstelle einer oberen, unteren, linken und/oder rechten Seite einer Taste zu kompensieren, und wobei die Sensordaten Hand- und/oder Armbewegungswerte des mindestens einen Benutzers auf der Grundlage eines optischen Sensors des Fahrzeugs umfassen; und
Verarbeiten der Benutzerschnittstellendaten (140), der Benutzereingabedaten mittels des Benutzereingabemodells und Erzeugen von Benutzerschnittstellen-Steuerdaten.

2. Verfahren nach Anspruch 1, wobei das Benutzereingabemodell einen maschinellen Lernalgorithmus umfasst, der dazu ausgestaltet ist, die Benutzereingabedaten auf der Grundlage der Benutzerschnittstellendaten und der Sensordaten des Fahrzeugs zu analysieren.

3. Verfahren nach Anspruch 2, wobei der maschinelle Lernalgorithmus durch anfängliche persönliche Kalibrierungsdaten, eine verallgemeinernde erweiterte Berührung, anfängliche Daten eines Modells für maschinelles Lernen und/oder Daten zur Erweiterung im Laufe der Zeit trainiert wird.

4. Verfahren nach einem der Ansprüche 2 oder 3, wobei der maschinelle Lernalgorithmus zumindest dazu ausgestaltet ist, eine Abweichung der Benutzereingabedaten in Bezug auf die Benutzerschnittstellendaten zu kompensieren.

5. Verfahren nach einem der vorhergehenden Ansprüche, wobei die Sensordaten Bewegungs-, Geschwindigkeits- und/oder Beschleunigungswerte umfassen, die von einem Bewegungs-, Geschwindigkeits- und/oder Beschleunigungssensor des Fahrzeugs bereitgestellt werden.

6. Verfahren nach einem der vorhergehenden Ansprüche, wobei die Sensordaten Blickwinkelwerte umfassen, die auf der Grundlage eines optischen Sensors des Fahrzeugs bereitgestellt werden.

7. Verfahren nach einem der vorhergehenden Ansprüche, wobei die Sensordaten Griffwerte in Bezug auf die Griffintensitäten des mindestens einen Benutzers der mindestens einen Benutzerschnittstelle auf die mindestens eine Benutzerschnittstelle umfassen.

8. Verfahren nach einem der vorhergehenden Ansprüche, wobei das Benutzereingabemodell dazu ausgestaltet ist, die Benutzereingabedaten auf der Grundlage eines Benutzerprofils weiter zu analysieren.

9. System zum Steuern mindestens einer Benutzerschnittstelle eines Fahrzeugs, umfassend:
eine erste Bereitstellungseinheit (12), die dazu ausgestaltet ist, Benutzerschnittstellendaten der mindestens einen Benutzerschnittstelle bereitzustellen;
eine zweite Bereitstellungseinheit (14), die dazu ausgestaltet ist, Benutzereingabedaten der mindestens einen Benutzerschnittstelle bereitzustellen;
eine dritte Bereitstellungseinheit (16), die dazu ausgestaltet ist, ein Benutzereingabemodell bereitzustellen, das dazu ausgestaltet ist, die Benutzereingabedaten auf der Grundlage der Benutzerschnittstellendaten und Sensordaten des Fahrzeugs zu analysieren, wobei das Benutzereingabemodell ferner dazu ausgestaltet ist, seitliche Versatzwerte zu analysieren, um einen Versatz einer Berührung des mindestens einen Benutzers der mindestens einen Benutzerschnittstelle einer oberen, unteren, linken und/oder rechten Seite einer Taste zu kompensieren, und wobei die Sensordaten Hand- und/oder Armbewegungswerte des mindestens einen Benutzers auf der Grundlage eines optischen Sensors des Fahrzeugs umfassen; und
eine Verarbeitungseinheit (18), die dazu ausgestaltet ist, die Benutzerschnittstellendaten und die Benutzereingabedaten mittels des Benutzereingabemodells zu verarbeiten und Benutzerschnittstellen-Steuerdaten zu erzeugen.

10. System nach Anspruch 9, wobei das Benutzereingabemodell eine maschinelle Lernalgorithmus-Einheit (20) umfasst, die dazu ausgestaltet ist, die Benutzereingabedaten auf der Grundlage der Benutzerschnittstellendaten und der Sensordaten des Fahrzeugs zu analysieren.

11. Fahrzeug mit einem System zum Steuern mindestens einer Benutzerschnittstelle des Fahrzeugs nach Anspruch 9 oder Anspruch 10.

12. Ein Computerprogrammprodukt mit Anweisungen, die, wenn sie auf einem Rechengerät ausgeführt werden, dazu ausgestaltet sind, die Schritte des Verfahrens nach einem der Ansprüche 1 bis 8 in einem System nach Anspruch 9 oder Anspruch 10 auszuführen.

## Revendications

1. Procédé mis en œuvre par ordinateur pour commander au moins une interface utilisateur d'un véhicule, consistant à :
fournir des données d'interface utilisateur (110) de ladite au moins une interface utilisateur ;
fournir des données d'entrée utilisateur (120) d'une entrée d'au moins un utilisateur de ladite au moins une interface utilisateur ;
fournir un modèle d'entrée utilisateur (130) configuré pour analyser les données d'entrée utilisateur sur la base des données d'interface utilisateur et de données de capteur du véhicule, dans lequel le modèle d'entrée utilisateur est en outre configuré pour analyser des valeurs de décalage latéral afin de compenser un décalage d'un toucher vers le côté supérieur, inférieur, gauche et/ou droit d'un bouton dudit au moins un utilisateur de ladite au moins une interface utilisateur, et dans lequel les données de capteur comprennent des valeurs de mouvement de la main et/ou du bras dudit au moins un utilisateur sur la base d'un capteur optique du véhicule ; et
traiter les données de l'interface utilisateur (140), les données d'entrée utilisateur au moyen du modèle d'entrée utilisateur et générer des données de commande d'interface utilisateur.

2. Procédé selon la revendication 1, dans lequel le modèle d'entrée utilisateur comprend un algorithme d'apprentissage automatique configuré pour analyser les données d'entrée utilisateur sur la base des données d'interface utilisateur et des données de capteur du véhicule.

3. Procédé selon la revendication 2, dans lequel l'algorithme d'apprentissage automatique est entraîné par des données d'étalonnage personnel initiales, un toucher augmenté généralisé, des données de modèle d'apprentissage automatique initiales et/ou des données d'augmentation au fil du temps.

4. Procédé selon l'une quelconque des revendications 2 ou 3, dans lequel l'algorithme d'apprentissage automatique est au moins configuré pour compenser un écart des données d'entrée utilisateur par rapport aux données d'interface utilisateur.

5. Procédé selon l'une quelconque des revendications précédentes, dans lequel les données de capteur comprennent des valeurs de mouvement, de vitesse et/ou d'accélération fournies par un capteur de mouvement, de vitesse et/ou d'accélération du véhicule.

6. Procédé selon l'une quelconque des revendications précédentes, dans lequel les données de capteur comprennent des valeurs d'angle de vue fournies sur la base d'un capteur optique du véhicule.

7. Procédé selon l'une quelconque des revendications précédentes, dans lequel les données de capteur comprennent des valeurs d'adhérence relatives à des intensités d'adhérence dudit au moins un utilisateur de ladite au moins une interface utilisateur sur ladite au moins une interface utilisateur.

8. Procédé selon l'une quelconque des revendications précédentes, dans lequel le modèle d'entrée utilisateur est configuré pour analyser plus en détail les données d'entrée utilisateur sur la base d'un profil utilisateur.

9. Système pour commander au moins une interface utilisateur d'un véhicule, comprenant :
une première unité de fourniture (12) configurée pour fournir des données d'interface utilisateur de ladite au moins une interface utilisateur ;
une deuxième unité de fourniture (14) configurée pour fournir des données d'entrée utilisateur de ladite au moins une interface utilisateur ;
une troisième unité de fourniture (16) configurée pour fournir un modèle d'entrée utilisateur configuré pour analyser les données d'entrée utilisateur sur la base des données d'interface utilisateur et de données de capteur du véhicule, dans lequel le modèle d'entrée utilisateur est en outre configuré pour analyser des valeurs de décalage latéral afin de compenser un décalage d'un toucher vers un côté supérieur, inférieur, gauche et/ou droit d'un bouton dudit au moins un utilisateur de ladite au moins une interface utilisateur, et dans lequel les données de capteur comprennent des valeurs de mouvement de la main et/ou du bras dudit au moins un utilisateur sur la base d'un capteur optique du véhicule ; et
une unité de traitement (18) configurée pour traiter les données d'interface utilisateur, les données d'entrée utilisateur au moyen du modèle d'entrée utilisateur et générer des données de commande d'interface utilisateur.

10. Système selon la revendication 9, dans lequel le modèle d'entrée utilisateur comprend une unité d'algorithme d'apprentissage automatique (20) configurée pour analyser les données d'entrée utilisateur sur la base des données d'interface utilisateur et des données de capteur du véhicule.

11. Véhicule comprenant un système pour commander au moins une interface utilisateur du véhicule selon la revendication 9 ou la revendication 10.

12. Produit de programme informatique comprenant des instructions qui, lorsqu'elles sont exécutées sur un dispositif informatique, sont configurées pour mettre en œuvre les étapes du procédé selon l'une quelconque des revendications 1 à 8 dans un système selon la revendication 9 ou la revendication 10.
